## Europäisches Patentamt
## European Patent Office
## Office européen des brevets

(11) Publication number: **0 204 005**
**B1**

(12) **EUROPEAN PATENT SPECIFICATION**

(45) Date of publication of patent specification: **14.03.90**

(51) Int. Cl.⁵: **B 62 D 35/00, B 62 D 37/02**

(21) Application number: **86900241.0**

(22) Date of filing: **06.12.85**

(86) International application number:
**PCT/JP85/00672**

(87) International publication number:
**WO 86/03466 19.06.86 Gazette 86/13**

(54) **AERODYNAMIC MOTORCAR.**

(30) Priority: **07.12.84 JP 257479/84**

(43) Date of publication of application:
**10.12.86 Bulletin 86/50**

(45) Publication of the grant of the patent:
**14.03.90 Bulletin 90/11**

(84) Designated Contracting States:
**DE FR GB IT**

(56) References cited:
**IT-A- 500 186**
**US-A-4 379 582**

(73) Proprietor: **MIWA, Tsutomu**
**3010-8, Sayamagaoka, 1-chome Tokorozawa-shi**
**Saitama 359 (JP)**

(72) Inventor: **MIWA, Tsutomu**
**3010-8, Sayamagaoka, 1-chome Tokorozawa-shi**
**Saitama 359 (JP)**

(74) Representative: **Haffner, Thomas M., Dr. et al**
**Patentanwaltskanzlei Dipl.-Ing. Adolf**
**Kretschmer Dr. Thomas M. Haffner**
**Schottengasse 3a**
**A-1014 Wien (AT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The invention relates to an aerodynamic motorcar having a principal car body and an outer shell, each wheel of the car being disposed within a wheel housing located between the car body and the outer shell, comprising an air passage between the car body and the outer shell having an air inlet and an air outlet, and preferably air guide plates being provided or a reverse lift plate being pivotally secured to an air outlet and movable into a position in which it is not remarkably different in level with the surrounding outer shell.

Recently, it is common to take into consideration the potential for reduction in the air resistance and lift of a motorcar when modifying the external form thereof. However, a motorcar has never been manufactured in which the visible external form is independent of the external form presented to the wind, or which invisibly incorporates within the visible car body a subsidiary car body with an aerodynamic design which is smaller at its front and rear portions than that of the visible car body. More specifically, there is no prior art which enables the aerodynamic car body to be incorporated within the visible car body. It is also unknown to treat in the aerodynamically most suitable manner a car's wheels and the wheel space which can be the main barrier to achieving reduction in the air resistance of the car.

In an earlier attempt the holder of this patent has suggested modifications to the car body and shell primarily for obtaining better stability and increased adherence to the ground at high speed. The prior art device, as disclosed by US—A—4 379 582, comprises an air induction passage extending longitudinally of the vehicle for directing air upwardly and rearwardly of the vehicle from a point forward thereof and through a passage outlet during vehicle movement, and a reverse lift plate pivotally mounted in said air induction passage, e.g. adjacent to the passage outlet, and having a trailing edge positioned higher than a leading edge thereof.

The present invention resides in transforming the part of the housing in which the wheel moves up and down, into an air passage through which air can pass smoothly, and aims at the provision of an aerodynamically efficient car body which is able to offer reduced air resistance and lift.

According to the present invention the aerodynamic motorcar is characterised in that the air passage is arranged immediately above the wheel housing whose top panel is cut out to form a hollow, that a wheel cover made of thin and resilient material is secured, at one side portion thereof, to the wheel housing panel to form part of the air passage, said passage having the air inlet and the air outlet disposed forwardly and rearwardly, respectively, of the associated wheel.

The air passages of the moving car guide the current of oncoming air over the wheels smoothly from the front to the rear of the car which has the effect that the aerodynamic car body is narrower at its front and rear portions. Thereby it is possible to reduce to a great degree the profile drag, while due to a somewhat greater surface area of the car body with which the air current makes contact there may be a small increase in frictional drag. The reduction in profile drag, however, is far greater than the increase in frictional drag so that as a whole the air resistance of the aerodynamic motorcar having the features of the present invention can be greatly reduced without the necessity of using small-sized wheels.

Moreover, the construction of the wheel cover in the upper portion of the wheel housing ensures that, if the body of the moving car is tilted about its longitudinal axis in a curve or when subjected to a strong side wind, the reverse lift generated does not act equally on the right and left sides of the car body. Actually, the reverse lift force at the side of the car body which is apt to be raised because of a greater mass flow of air is greater than at the other side. Such kind of action facilitates stability of the car and safe driving.

Brief description of the drawings

Figs. 1 to 6, apart from the lower half of Fig. 4, left half of Fig. 5 and left half of Fig. 6 which shows a conventional motorcar, are illustrations of a first embodiment of the present invention in which:

Fig. 1 is a perspective view of the body of a motorcar to which the present invention is applied;

Fig. 2 is a section taken along the line A—A of Fig. 1;

Fig. 3 is a side elevational view;

Fig. 4 is a top view;

Fig. 5 is a front view;

Fig. 6 is a rear view;

Figs. 7 to 10 show a second embodiment of the present invention in which:

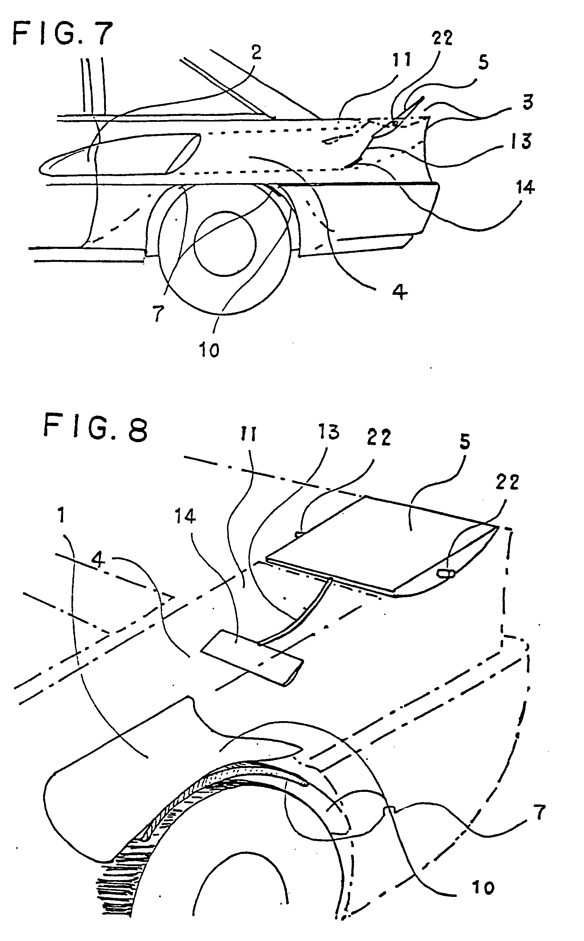

Fig. 7 is a side elevational view;

Fig. 8 is a perspective view showing the interior without the outer shell;

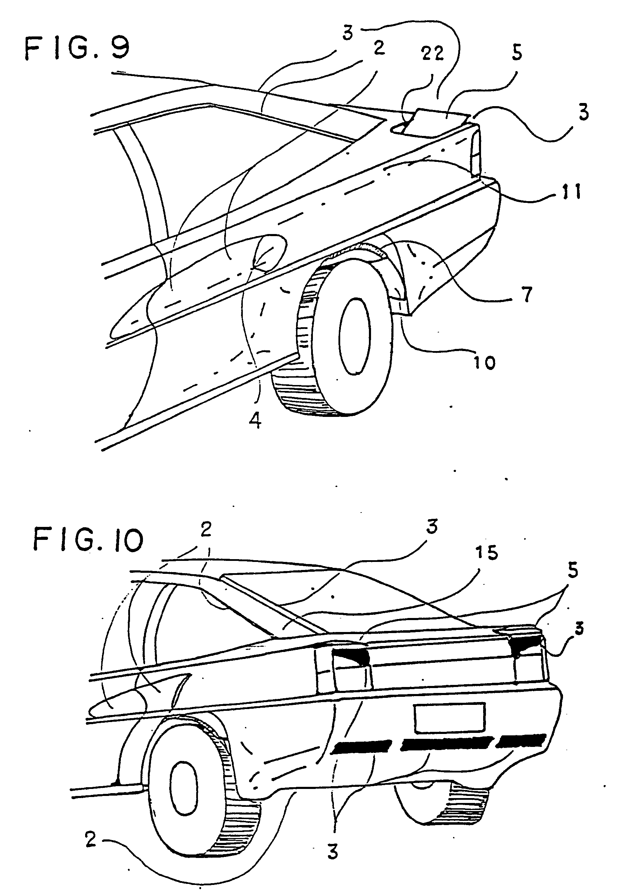

Fig. 9 is a perspective view of the external view;

Fig. 10 is a perspective view of the rear.

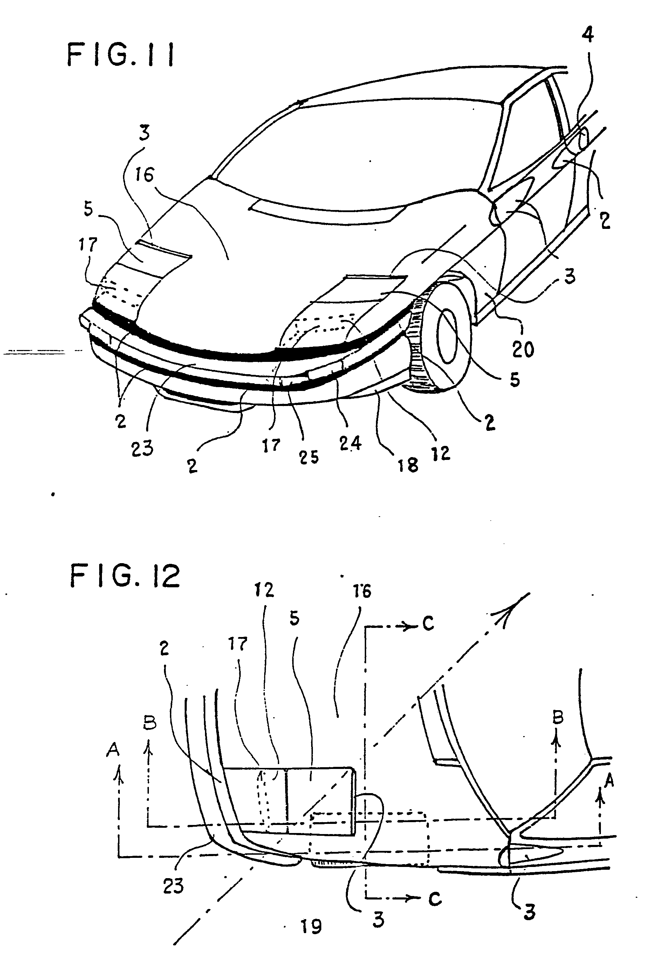

Figs. 11 to 15 show a third embodiment of the present invention in which:

Fig. 11 is a perspective view;

Fig. 12 is a top view;

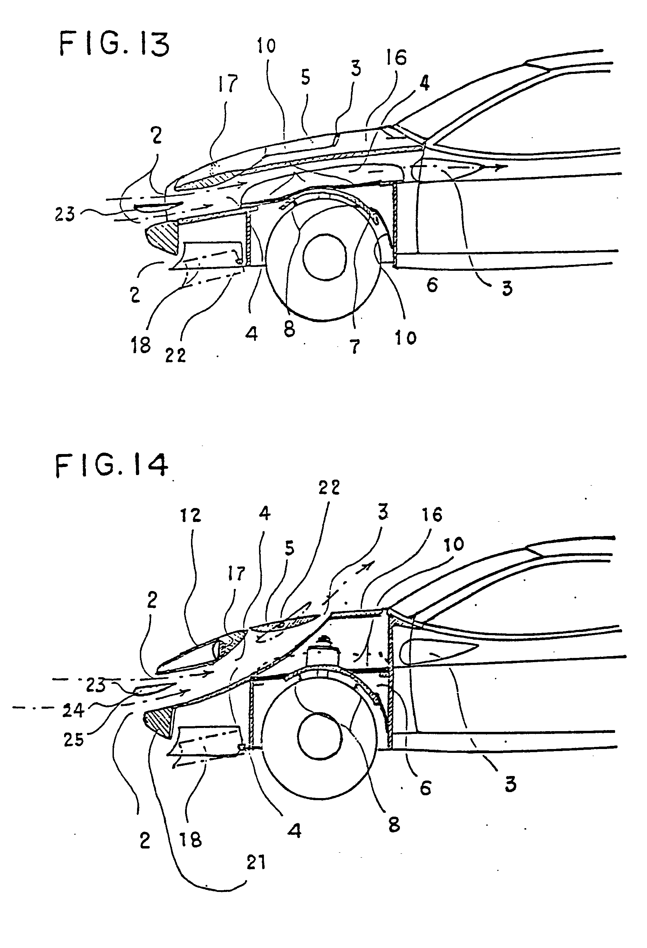

Fig. 13 is a side sectional view taken along the line A—A of Fig. 12;

Fig. 14 is a side sectional view taken along the line B—B of Fig. 12;

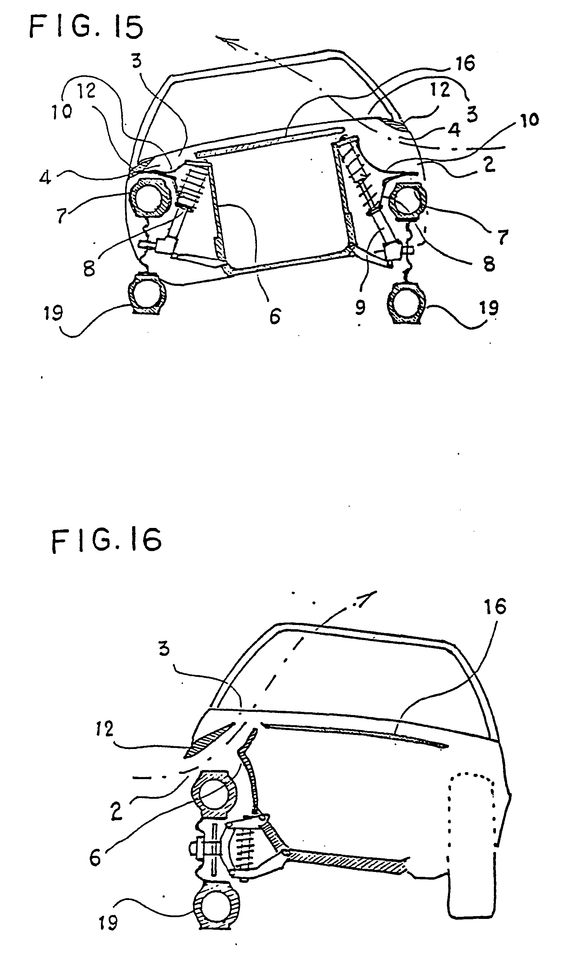

Fig. 15 is a front sectional view taken along the line C—C of Fig. 12;

Fig. 16 is a front sectional view taken along the front wheel shaft, showing a fourth embodiment of the present invention;

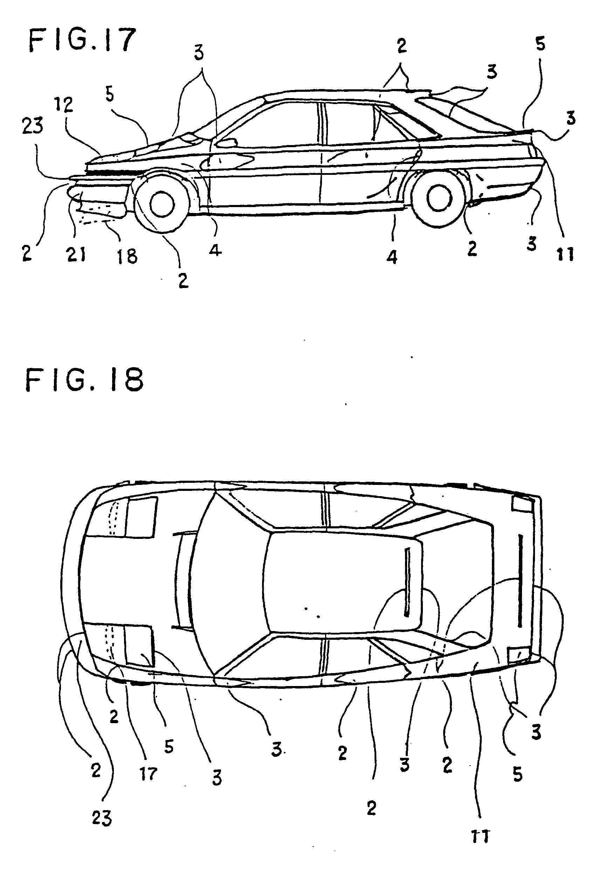

Fig. 17 is a side evational view of a fifth embodiment of the present invention; and

Fig. 18 is a top view of Fig. 17.

Best mode for carrying out the invention

Embodiments of the present invention will be described with reference to the accompanying drawings.

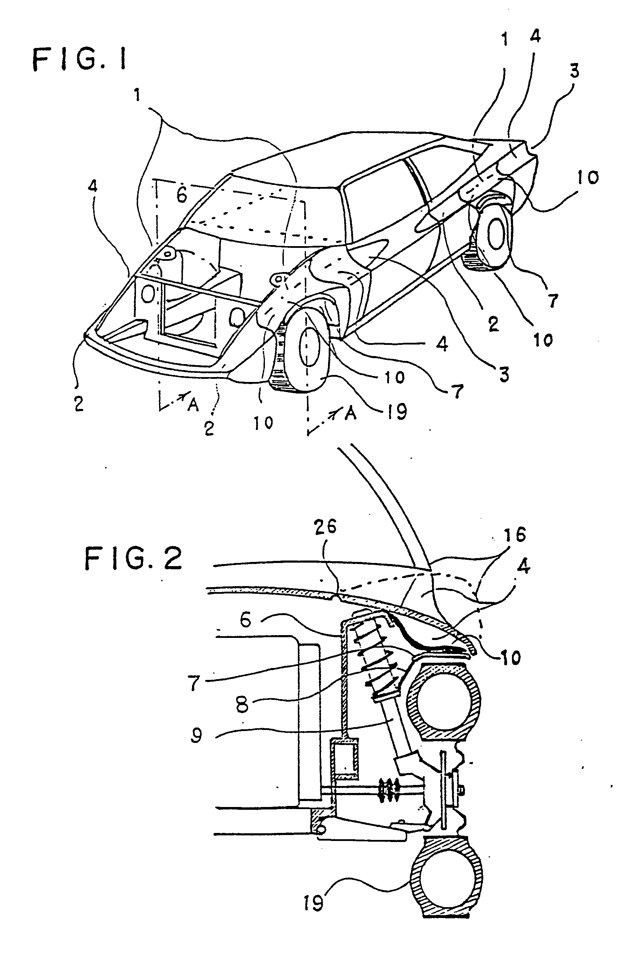

Fig. 1 is a perspective view of an aerodynamic motorcar, showing a first embodiment of the present invention in the flame of the body, the engine and other auxiliary devices being omitted.

In the drawing, the solid panel composed of such as iron plate which is positioned above the wheel is cut away to provide a hollow 1 formed thereat. The height of a wheel housing panel can be made slightly larger than that of the wheel by providing a hollow 1 on the wheel housing panel which encloses the wheel. In other words, the height of the wheel housing panel can be made far lower than that of a conventional car in which there is a large space above the wheel. This can cause air to pass horizontally immediately above the wheels through the hollow 1.

At the front and the rear of the hollow 1, the air inlet 2 and the air outlet 3 are provided, and the intermediate portion between the inlet 2 and the outlet 3 can be transformed into an air passage 4, thereby enabling the current of oncoming air to flow smoothly a few centimeters above the wheel.

A wheel cover 10 made of resilient material such as synthetic rubber or the like is provided over, in front of and at the rear of the wheel 19 to separate the air current into two portions, flowing in the wheel house panel and in the air passage 4, respectively.

This allows the current of oncoming air flowing in the hollow 1 positioned immediately above the wheel 19 not to be effected by a turbulent flow generated in the wheel house by the rotation of the wheel and to take the form of an ideal laminar flow.

In other words, in designing the upper half of a car body except for the window area, it is possible to narrow the front and rear portions thereof to a large degree enabling the design of an aerodynamically ideal car body and its manufacture can realize the car.

Referring to Fig. 2 which is a sectional view taken along the line A—A of Fig. 1 and seen from the front of the car, upper and lower stays 8 are secured at their lower portion to a lower spring member 9 of a suspension system, and are mounted at their upper end in an upper interlocking member 7.

When the wheel 19 is thrust upwardly, the upper interlocking member 7 and the upper and lower stay 8 are pushed up by the lower spring member 9. However, the upper half of the wheel 19 is kept under the cover, thanks to the expansion of the wheel cover 10 made of flexible material which is secured to the wheel housing panel 6 forwardly and rearwardly of the wheel 19.

If the outer sheet of a side panel 20 or a bonnet 16 is made of a resilient material to cope with the upward thrusting of the upper interlocking member 7, it can be provided at a position as low as just several centimeters above the wheel 19. In such a case, it is not necessary to make the entire bonnet flexible. Only the bending portion 26 of the bonnet, for example, need to be made of resilient material.

In Fig. 2, the dotted line representing the line of the bonnet or the side panel above the wheel 19 shows the position of the outer shell of the conventional car. The solid line indicates that of the first embodiment of this invention.

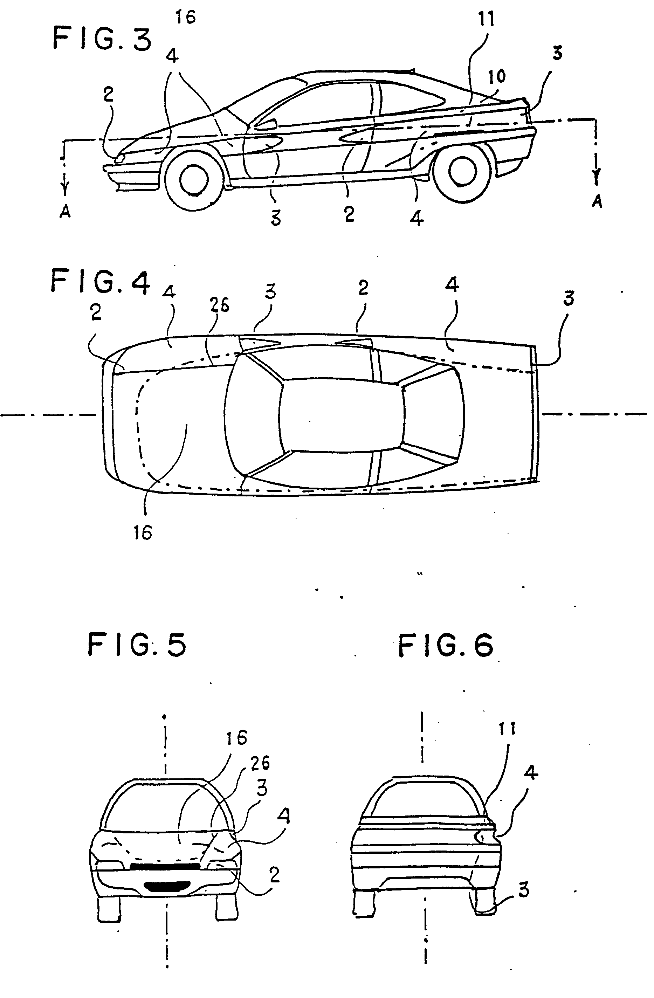

Fig. 3 is a side elevation view of the external form of a high-powered car to which this invention is applied. A long recessed portion is provided above each rear wheel in such a manner as to extend from the door to the rear of the car. The front of this recess forms the air inlet 2, whereas the recessed portion and the rearmost portion respectively represent the air passage 4 and the air outlet 3. Since the air current flows on the side surface of the car body toward a portion which makes lower atmospheric pressure, the air current flowing around the recess and along the side surface of the car body flows into this recessed air passage 4, and flows out from the rearmost portion of the recess, i.e., the air outlet 3 where the atmospheric pressure is lowest.

The air current flowing in this recessed air passage 4 in this embodiment makes a quite different configuration from that of the conventional car when seen from above.

Fig. 4 is a top view of a motorcar, in which the upper half thereof shows the car to which this invention is applied and the lower half relates to a conventional car.

The dotted line in Fig. 4 shows the configuration of the outer shell of the car body as seen from above which is taken along the line A—A of Fig. 3.

It is apparent that the configuration of the air current flowing along the outer shell side of the car body shown in the upper half is quite different from that in the conventional car shown in the lower half.

In the side view of Fig. 3, the configuration of the air current of the car of the present invention looks the same as that of the conventional car. However, it becomes quite different from that of the known car with respect to the air passage 4 formed in the recess in the upper half of the car body shown in Fig. 4 taken along the line A—A of Fig. 3.

More specifically, in the upper half of Fig. 4, the rear portion of the car body is narrowed extensively by the recess provided over the rear wheel which is shown in Fig. 3.

Fig. 5 is a front view of a car, in which the right half illustrates the car to which the present invention is applied and which is shown in Figs. 3 and 4, while the left half represents the conventional car.

In the right half of Fig. 5, the shoulder of the large-sized bonnet which extends above the front wheel is hollowed out, whereas in the left half the bonnet is rounded because of the space incorporated therein in which the wheel moves up and down.

The configuration of the air flow through the very low passage provided above the front wheel in the car of the present invention is quite different from that of the conventional car in which the air passes over a large space occupied by the suspension system of the front wheel.

Fig. 6 is a rear view of a car, in which the right half illustrates the car of the present invention and the left half shows the conventional car. In the right half of Fig. 6, the air outlet 3, i.e., the rear end of the air passage 4 which represents a recess on the side of the car body allows the aerodynamic car body to be made narrower at its rear end. The portion overhanging the air outlet 3 which is represented by the recess on the rear of the car body constitutes a rear wing 11. This forms the upper surface of the air passage 4. As shown in Fig. 3, the rear wing 11 gently slopes upward from above the rear wheel toward the rear of the car.

In consequence, the rear wing 11 causes reverse lift to be generated by directing the current of oncoming air slightly upward and causing it to flow out in an obliquely upper and rearward direction, thereby increasing the tendency of the rear wheels to stay on the ground. This can prevent a sharp heel of the car by means of the action of the air current.

The rear wing 11 also prevents the air stream flowing down by the roof and the air stream flowing up by the side of the car body from interfering with each other. In the conventional car, the rear of the car body is sucked backward by von Karman's vortex street which is generated as a result of interference between these air currents, thereby increasing the air resistance. The occurrence of von Karman's vortex street can be prevented by this rear wing 11 which acts to separate these two air currents.

Part of the rear of the rear wing 11 is cut off and pivotally supported so as to be transformed into a reverse lift plate 5 which has a lowered front end and a raised rear end.

Figs. 8 and 9 show the opening/closing mechanism of the reverse lift plate 5 which utilizes wind pressure.

Fig. 7 is a side view of the reverse lift plate 5 turnably supported on the rear of the rear wing 11. The solid line shows it in the state wherein it is opened, while the dotted line shows a closed plate 5.

Fig. 8 is an enlarged perspective view of the reverse lift plate 5. When it is closed, the upper surface of the reverse lift plate 5 is flush with the rear wing 11, thus ensuring that the plate 5 does not represent an unsightly appendage which would harm the appearance of the car.

As shown in Figs. 7 and 8, a reverse lift guide 14 is secured to the distal end of a guide stay 13 which protrudes downwardly from the front end of the reverse lift plate 5 in a slanting fashion, the reverse lift guide 14 being slanted such that its front edge is positioned lower than the rear edge.

As the amount of air flowing through the air passage 4 increases, the reverse lift effect acting on the reverse lift guide 14 becomes larger than the gravity or the force of a spring which normally acts to keep the reverse lift plate 5 flat.

In consequence, the reverse lift guide 14 is lowered, and the reverse lift plate 5 is raised at its rear end, thereby causing the air current to be directed upward and the reverse lift to be increased. As the reverse lift guide 14 is lowered down to the bottom surface of the air passage 4, the angle of inclination made by the rear end of the air passage 4 becomes very large relative to its bottom surface, causing the air to flow further upward and the reverse lift effect to be further increased.

The car will have the tendency to lean toward the downwind side thereby raised higher with the other side when subjected to a strong side wind or when making a turn. This undesirable tendency can be prevented to some extent by the action of the reverse lift acting on the reverse lift plate 5 in proportion to the amount of air flowing through the air passage 4.

The car body receives more air flow on its windward side when it receives the side wind or on the side which represents the inner side in terms of the turning direction when making a turn, causing a larger amount of air to flow through the air passage 4 on that side.

This causes the air passage 4 located at the windward side or the inner side to be effected by a larger amount of reverse lift than that applied to the other side.

In consequence, the windward side or the inner side of the car body which is easily raised is pushed downward by the action of the reverse lift, thus ensuring safe driving.

With this reverse lift guide 14 provided, the side of the air passage 4 must be covered by the outer shell, thereby making the passage 4 cylindrical.

Fig. 9 is a perspective view of the embodiment in which the side of the air passage 4 is covered so that the guide stay 13 and the reverse lift guide 14 are hidden by the outer shell.

In the embodiment shown in Fig. 9, the air inlet 2 provided on the side surface of the car body looks like the air inlet for the radiator of a known high-powered car in which the engine is located near the rear wheels, and it does not harm the appearance of the car shown in this embodiment.

In the car of this embodiment, however, the rear of the car body presented to the wind is extensively narrowed, thereby constituting an aerodynamic car body which is smaller than the visible car body. Only the visible car body which encloses the subsidiary car body with an aerodynamic design is similar to that of the known car.

Fig. 10 is a perspective view of the rear of the embodiment shown in Fig. 9. The rear of the aerodynamic car body which is constituted by the inner surfaces of the air passages 4 is narrowed extensively, the narrowing starting at the central portion of the car body, thereby reducing the air resistance.

The visible car body including the rear wing 11, however, looks the same as that of the known car.

In the car of this embodiment, the air passage 4 is provided by utilizing the space between the rear wheel housing and the trunk compartment. This makes the capacity of the trunk compartment smaller. Even in the trunk compartment of the known car, however, the portion of the trunk compartment into which the wheel housing extends and the portion to the rear thereof are seldom used. In this invention, since the air passage 4 is provided in that part of the trunk compartment which is least used, it does not lead to any inconvenience. The inner wall of the trunk room, except for the portion thereof which covers the space occupied by the suspension system, may be made of a resilient material, so that, if a large amount of luggage is carried, the air passage 4 may be closed.

Figs. 11 to 15 illustrate a third embodiment of the present invention, of which Fig. 11 is a perspective view of an aerodynamic car in which a long air inlet 2 is provided on each side of the car body by utilizing the portion where the bonnet 16 and the side panel 20 meet in such a manner as to extend from the front to the side of the car body. The reverse lift plate 5 is pivotally supported at the air outlet 3 provided on the bonnet 16. The long air passage 4 is provided under the bonnet 16, thereby constituting an aerodynamically ideal car body which is smaller in size and which is hidden within the visible car body. A recess is provided at the front of the door to form the air outlet 3 on the side of the car body between the rear ends of the bonnet 16 and the side panel 20.

Fig. 12 is a top view of the left half of the embodiment shown in Fig. 11, showing how the large-sized bonnet 16, the air outlet 3, the reverse lift plate 5 and the front wheel are positioned relative to each other. The car body presented to the wind is extensively hollowed out in front of the portion thereof where the suspension space for the front wheel is positioned, so as to provide the air passage 4.

Fig. 13 is a side sectional view taken along the line A—A of Fig. 12 which runs through the center of the wheel in the longitudinal direction showing the air passage provided above and on the outer side of the wheel.

In the embodiment, the air stream formed when the car is running straight ahead flows in along the upper and lower surfaces of a reverse lift bumper 23 positioned above a main bumper 27, passes through the air passage 4 located above and close to the wheel 19, and flows out from the air outlet 3 provided at the front of the door to the side of the car body.

Fig. 14 is a side sectional view taken along the line B—B of Fig. 12, showing the air passage 4 provided above and inner side of the wheel.

Similar to the flow shown in Fig. 13, the air stream flows into the air passage 4 along the upper and lower surfaces of the reverse lift bumper 23 while generating reverse lift, since the rate of flow at the upper surface is smaller than that at the lower surface and the atmospheric pressure at its upper surface is larger than that at its lower surface.

Above this air stream, another air stream flows into the air passage 4 along the upper and lower surfaces of a reverse lift member 12 in which headlight 17 is incorporated. The air stream which passes along the lower surface of this headlight flows out over the bonnet 14, while lowering the front end of the reverse lift plate 5 pivotally secured at the air outlet 3 on the bonnet and raising the rear end thereof. The air stream which flows along the upper surfaces of the reverse lift member 12 and the reverse lift plate 5 flows at a smaller speed and has a greater atmospheric pressure than that flowing along the lower surfaces, thereby causing the front ends of the reverse lift member 12 and the reverse lift plate 5 to be lowered further than their rear ends and causing reverse lift to act on the reverse lift member 12 and the reverse lift plate 5. In consequence, the car body is pushed downward, ensuring safe running.

The reverse lift generated by this reverse lift system does not act equally on the right and left sides of the car body. When the car is subjected to a strong side wind or when making a turn, the windward side of the car body receives a larger wind pressure than the downwind side, causing the car body to lean with its downwind side lower and thereby making the running unstable. In the car of this embodiment, air flows only in the air passage 4 located at the windward side, generating a large reverse lift. In consequence, the tendency to stay on the ground is increased only with respect to the wheels located on the side which is apt to be raised, thereby ensuring safe driving.

The air passage 4 shown in Fig. 14 is provided above the wheel so that it avoids the suspension system for the front wheel and the space which it occupies.

Fig. 15 is a section taken along the line C—C of Fig. 12 and seen from its front side, showing a car making a left turn with wind blowing toward it obliquely from the front left hand side as shown by the dotted line of Fig. 12. When the car body leans over by virtue of the centrifugal force generated by the action of turning and the wheel is simultaneously thrust upward, the upper interlocking member 7 secured to the lower spring member 9 is raised, and the wheel cover 10 is also raised, thereby almost closing the air passage 4 located on the outer side in terms of the turning direction. Since the air passage 4 located at the outer side is thus closed, almost no reverse lift is generated.

In consequence, large reverse lift acts only on the windward side, and this can to some extent prevent the car from leaning toward the downwind side, this tendency being caused by the inertia force generated at the time of making a turn.

Fig. 16 is a front and sectional view of a fourth embodiment of the present invention. In this embodiment, the front wing constitutes the reverse lift member 12. The wheel cover 10, the upper interlocking member 7 and the upper and lower stays 8 are not provided. If the suspension system is not located immediately under the bonnet 16, the air outlet 3 can be provided at any position on the bonnet 16.

In this embodiment, the air passage 4 located at the outer side in terms of the turning direction becomes closed when the car makes a turn. However, a smaller amount of reverse lift occurs on the inner side, because smooth air flow is not available without the wheel cover 10.

In the fourth embodiment, any type of suspension system may be employed. This can be carried out with the same level of production cost as with a conventional car.

Fig. 17 is a side elevational view of a fifth embodiment of the present invention, showing a 4-door sedan to which this invention is applied. Fig. 18 is a top view thereof.

The surface area of the car body with which the air current makes contact can be increased by several percent by means of the air passages 4 provided at various positions within the car body. The resistance caused by the friction of air is correspondingly increased. However, the frictional drag occupies only 5 to 7 percent of the air resistance occurring on the car, and the remaining 95 to 93 percent represents the profile drag.

In this invention, it is possible to reduce to a great degree the profile drag which normally occupies 95 to 97 percent of the air resistance by the provision of an aerodynamic car body which is narrower at its front and rear portions. The reduction in profile drag is far greater than the increase in frictional drag.

As a whole, the air resistance generated on the car can be greatly reduced with the aerodynamically smaller car body of this invention.

It has heretofore been known to reduce the size of wheels and the space occupied by the suspension system and thereby to make the front and rear of the car body narrower in order to reduce air resistance.

In this invention, it is possible to employ a large-sized wheel and to provide a large space for the suspension system in an aerodynamic car body which is narrower at its front and rear ends.

The fact that large-sized wheels and a larger space for the susension system are allowed leads to an increased tendency for the wheels to stay on the ground and allows for a comfortable ride. Also, stable running is made possible by the reverse lift generated when the car is subjected to a side wind or when it makes a turn.

Industrial applicability

As will be understood from the foregoing description, the aerodynamic motorcar of the present invention makes it possible for fuel cost to be cut by reducing the air resistance experienced by a car. Stable driving is also ensured by increasing reverse lift when the car is running at high-speeds or is making a turn. These effects can be realized without modification of the essentially rectangular external form of the car body which thus looks the same as that of a conventional car, allowing the present invention to be applied to ordinary passenger cars.

Motorcars have previously been aerodynamically improved. However, the main barrier to achieving reductions in air resistance represents the wheels and the space for the suspension system, as well as the fixed idea about the appearance of a car body which is held by ordinary people. The present invention makes it possible to provide an aerodynamically ideal motorcar without changing the external form of the conventional car.

The present invention can be carried out at a low production cost, since it does not employ any greater proportion of expensive outer shell than does the conventional car.

Claims

1. Aerodynamic motorcar having a principal car body and an outer shell, each wheel (19) of the car being disposed within a wheel housing located between the car body and the outer shell, comprising an air passage (4) between the car body and the outer shell having an air inlet (2) and an air outlet (3), and preferably air guide plates being provided or a reverse lift plate (5) being pivotally secured to an air outlet (3) and movable into a position in which it is not remarkably different in level with the surrounding outer shell, characterised in that the air passage (4) is arranged immediately above the wheel housing whose top panel is cut out to form a hollow (1), that a wheel cover (10) made of thin and resilient material is secured, at one side portion thereof, to the wheeel housing panels (6) to form part of the air passage (4), said passage (4) having the air inlet (2) and the air outlet (3) disposed forwardly and rearwardly, respectively, of the associated wheel (19).

2. Motorcar as claimed in claim 1, wherein an upper and a lower stay (8) is mounted at its upper end in a thin plate-like upper interlocking member (7) provided in said hollow (1) and secured at its lower end to a lower spring member (9), while said upper interlocking member (7) is secured to the wheel cover (10).

3. Motorcar as claimed in claim 1 or 2, wherein the outer shell located over and around said hollow (1) is made of a resilient material.

4. Motorcar as claimed in claim 1, 2 or 3, wherein a long recessed portion extends in the longitudinal direction over the rear wheel (19) in said hollow (1) from the side to the rear of the car to form said air passage (4), and the protruding upper portion of said recess constitutes a rear wing (11).

5. Motorcar as claimed in claim 4, wherein a reverse lift plate (5) is pivotally secured to the tail of said rear wing (11) constituting the upper portion of said air passage (4) provided in said hollow (1), said reverse lift plate (5) being lowered at its front end and raised at the rear end.

6. Motorcar as claimed in claim 5, wherein a guide stay (13) is secured to the front end of said reverse lift plate (5) provided at the tail of said air passage (4) located in said hollow (1), said guide stay (13) protruding obliquely downward, said guide stay (13) being provided at its distal end with a thin plate like reverse lift guide (14) which has a front edge lower than its rear edge, said air passage (4) being enclosed to be made cylindrical.

7. Motorcar as claimed in any one of claims 1 to 6, wherein a longitudinal air inlet (2) is formed from the front to the side of the car by utilizing the portion where the outer shell covering said air passage (4) provided in said hollow (1) and the panel (20) constituting another outer shell meet each other, and an air outlet (3) is provided near the front end of the adjacent door.

8. Motorcar as claimed in any one of claims 1 to 7, wherein a reverse lift plate (5) is pivotally secured to an air outlet (3) provided on the bonnet (16) covering said air passage (4) provided in said hollow (1), said reverse lift plate (5) having a front end lower than the rear end.

9. Motorcar as claimed in any one of claims 1 to 8, wherein the headlight (17) is provided at the back of the outer shell covering said air passage (4) provided in said hollow (1), and said air passage (4) for passing air smoothly is provided under the headlight (17).

10. Motorcar as claimed in ane one of claims 1 to 9, wherein a position light (25) or a direction indicator (24) is secured to a reverse lift bumper (23) provided at the air inlet (2) of said air passage (4) provided in said hollow (1).

11. Motorcar as claimed in any one of claims 1 to 10, wherein said air passage (4) provided in said hollow (1) is composed of a resilient material (10) within a trunk compartment except for the portion (7) covering the air space where the rear wheel (19) moves up and down by the suspension system.

**Patentansprüche**

1. Aerodynamisches Kraftfahrzeug mit einer Grundkarosserie und einer äußeren Schale, wobei jedes Rad (19) des Fahrzeuges in einem zwischen der Karosserie und der äußeren Schale angeordneten Radkasten untergebracht ist, mit einer einen Lufteinlaß (2) und einen Luftauslaß (3) aufweisenden Luftführung (4) zwischen der Karosserie und der äußeren Schale und vorzugsweise mit Luftleitplatten oder einen an einem Luftauslaß (3) schwekbar angebrachten, in eine hinsichtlich des Verlaufes der umgebenden äußeren Schale nicht merklich unterschiedliche Lage beweglichen Abtriebsplatte (5), dadurch gekennzeichnet, daß die Luftführung unmittelbar oberhalb des Radkastens angeordnet ist, dessen Deckplatte zur Bildung eines Hohlraumes (1) ausgeschnitten ist, und daß eine aus dünnem und nachgiebigem Material bestehende Radabdeckung (10) zur Bildung eines Teiles der Luftführung (4) mit einem Randbereich an den Radkastenplatten (6) befestigt ist, wobei der Lufteinlaß (2) und der Luftauslaß (3) der Luftführung (4) vor bzw. hinter dem zugeordneten Rad (19) vorgesehen sind.

2. Kraftfahrzeug nach Anspruch 1, bei welchem mit dem oberen Ende einer oberen und einer unteren Strebe (8) ein im Hohlraum (1) untergebrachter plattenartiger oberer Anschlußteil (7) verbunden ist und das untere Ende der Streben an einem unteren Federbein angebracht ist, wobei der obere Anschlußteil (7) mit der Radabdeckung (10) verbunden ist.

3. Kraftfahrzeug nach Anspruch 1 oder 2, bei welchem die äußere Schale über dem und rund um den Hohlraum (1) aus einem nachgiebigen Material besteht.

4. Kraftfahrzeug nach Anspruch 1, 2 oder 3, bei welchem sich eine langgestreckte Ausnehmung in Längsrichtung über dem Hinterrad (19) im Hohlraum (1) von der Seite zum Heck des Fahrzeuges zur Bildung der Luftführung (4) erstreckt und der vorspringende obere Abschnitt der Ausnehmung einen Heckflügel bildet.

5. Kraftfahrzeug nach Anspruch 4, bei welchem am hinteren Ende des Heckflügels (11) eine Abtriebplatte (5) schwenkbar angelenkt ist und den oberen Abschnitt der Luftführung (4) im Hohlraum (1) bildet, wobei die Abtriebsplatte (5) am vorderen Ende abgesenkt und am hinteren Ende angehoben ist.

6. Kraftfahrzeug nach Anspruch 5, bei welchem mit dem vorderen Ende der Abtriebsplatte (5) am hinteren Ende der Luftführung (4) im Hohlraum (1) eine Führungsstrebe (13) verbunden ist, die schräg abwärts ragt und an ihrem fernen Ende mit einer dünnen plattenartigen Abtriebsleitfläche (14) versehen ist, deren Vorderkante niedriger liegt als die Hinterkante, wobei die Luftführung (4) zur Ausbildung einer zylindrischen Gestalt umschlossen ist.

7. Kraftfahrzeug nach einem der Ansprüche 1 bis 6, bei welchem unter Ausnützung des Bereiches, in dem die die im Hohlraum (1) vorgesehene Luftführung (4) bedeckende äußere Schale und eine eine andere äußere Schale darstellende Platte (20) aneinandergrenzen, ein in Längsrichtung von der Frontpartie zur Seite des Fahrzeuges verlaufender Lufteinlaß (2) ausgebildet ist und ein Luftauslaß (3) nahe bei der Vorderkante der benachbarten Tür vorgesehen ist.

8. Kraftfahrzeug nach einem der Ansprüche 1 bis 7, bei welchem an einem auf der die im Hohlraum (1) vorgesehene Luftführung (4) bedeckenden Motorhaube (16) befindlichen Luftauslaß (3) eine Abtriebsplatte (5) schwenkbar angelenkt ist, deren vorderes Ende niedriger liegt als deren hinteres Ende.

9. Kraftfahrzeug nach einem der Ansprüche 1 bis 8, bei welchem die im Hohlraum (1) vorgesehene Luftführung (4) von dem an der Rückseite der äußeren Schale befindlichen Scheinwerfer (17) bedeckt ist und zum freien Hindurchlieten von Luft unter dem Scheinwerfer (17) angeordnet ist.

10. Kraftfahrzeug nach einem der Ansprüche 1 bis 9, bei welchem ein Begrenzungslicht (25) oder ein Fahrtrichtungsanzeiger (24) an einem beim Lufteinlaß (2) der im Hohlraum (1) vorgesehenen Luftführung (4) befindlichen Abtriebs-Stoßfänger (23) angebracht ist.

11. Kraftfahrzeug nach einem der Ansprüche 1 bis 10, bei welchem die im Hohlraum (1) vorgesehen Luftführung (4) im Kofferraum mit Ausnahme des den Luftraum, in welchem sich das Hinterrad (19) durch die Aufhängung auf und ab bewegt, bedeckenden Abschnittes (7) aus einem nachgiebigen Material (10) besteht.

## Revendications

1. Voiture automobile aérodynamique comportant une caisse principale de voiture et une enveloppe extérieure, chaque roue (19) de la voiture étant disposée à l'intérieur d'un logement de roue situé entre la caisse de la voiture et l'enveloppe extérieure, comprenant un passage d'air (4) entre la caisse de voiture et l'enveloppe extérieure comportant une entrée d'air (2) et une sortie d'air (3), et, de préférence, des plaques de guidge d'air étant disposées, ou une plaque de sustentation inverse (5) étant fixée à pivotement sur une sortie d'air (3) et déplaçable vers une position dans laquelle son niveau ne diffère pas de façon remarquable de celui de l'enveloppe extérieure qui l'entoure, caractérisée en ce que le passage d'air (4) est ménagé immédiatement au-dessus du logement de roue, dont le panneau supérieur est découpé pour former un creux (1), en ce qu'un couvre-roue (10) en matière mince et élastique est fixé, sur une de ses parties latérales, aux panneaux (6) de logement de roue pour former une partie du passage d'air (4), ledit passage (4) présentant ladite entrée d'air (2) et ladite sortie d'air (3) disposées, respectivement, à l'avant et à l'arrière de la roue associée (19).

2. Voiture automobile selon la revendication 1, dans laquelle une entretoise supérieure et inférieure (8) est montée à son extrémité supérieure dans un organe supérieur de verrouillage mutuel (7) en forme de plaque mince disposé dans ledit creux (1) et fixé à son extrémité inférieure à un organe inférieur formant ressort (9), alors que l'organe supérieur de verrouillage mutuel (7) est fixé sur le couvre-roue (10).

3. Voiture automobile selon la revendication 1 ou 2, dans laquelle l'enveloppe extérieure située au-dessus et autour dudit creux (1) est en matière élastique.

4. Voiture automobile selon la revendication 1, 2 ou 3, dans laquelle une longue partie évidée s'étend dans la direction longitudinale au-dessus de la roue arrière (19) dans ledit creux (1), depuis le côté vers l'arrière de la voiture pour former ledit passage d'air (4), et dans laquelle la partie supérieure en saillie dudit évidement constitue une aile arrière (11).

5. Voiture automobile selon la revendication 4, dans laquelle une plaque arrière de sustentation inverse (5) est fixée à pivotement sur l'arrière de ladite aile arrière (11) en constituant la partie supérieure dudit passage d'air (4) ménagé dans ledit creux (1), ladite plaque de sustentation inverse (5) étant abaissée à son extrémité avant et levée à l'extrémité arrière.

6. Voiture automobile selon la revendication 5, dans laquelle une entretoise de guidage (13) est fixée sur l'extrémité avant de ladite plaque de sustentation inverse (5) disposée sur l'arrière dudit passage d'air (4) située dans ledit creux (1), ladite entretoise de guidage (13) étant en saillie obliquement vers le bas, ladite entretoise de guidage (13) comprenant à son extrémité distale un guide de sustentation inverse (14) sous la forme d'une plaque mince dont l'extrémité avant est plus basse que son extrémité arrière, ledit passage d'air (4) étant enfermé pour être de forme cylindrique.

7. Voiture automobile selon l'une quelconque des revendications 1 à 6, dans laquelle une entrée d'air longitudinale (2) est formée depuis l'avant vers le côté de la voiture en utilisant la partie où l'enveloppe extérieure couvrant ledit passage d'air (4) ménagé dans ledit creux (1) et le panneau (20) constituant une autre enveloppe extérieure se rencontrent, et dans laquelle une sortie d'air (3) est ménagée près de l'extrémité avant de la porte adjacente.

8. Voiture automobile selon l'une quelconque des revendications 1 à 7, dans laquelle une plaque de sustentation inverse (5) est fixée à pivotement sur une sortie d'air (3) ménagée sur le capot (16) couvrant ledit passage d'air (4) ménagé dans ledit creux (1), ladite plaque de sustentation inverse (5) possédant une extrémité avant plus basse que l'extrémité arrière.

9. Voiture automobile selon l'une quelconque des revendications 1 à 8, dans laquelle le projecteur (17) est disposé à l'arrière de l'enveloppe extérieure couvrant ledit passage d'air (4) ménagé dans ledit creux (1), et dans laquelle ledit passage d'air (4) destiné à un passage régulier d'air est disposé sous le projecteur (17).

10. Voiture automobile selon l'une quelconque des revendications 1 à 9, dans laquelle un feu de position (25) ou un indicateur de direction (24) est fixé sur un pare-choc (23) de sustentation inverse disposé à l'entrée d'air (2) dudit passage d'air (4) ménagé dans ledit creux (1).

11. Voiture automobile selon l'une quelconque des revendications 1 à 10, dans laquelle ledit passage d'air (4) ménagé dans ledit creux (1) est constitué d'une matière élastique (10) à l'intérieur d'un compartiment de coffre sauf pour la partie (7) qui couvre l'espace d'air où la roue arrière (19) monte et descend en raison du système de suspension.

# FIG. 1

# FIG. 2

EP 0 204 005 B1

FIG.3

FIG.4

FIG.5

FIG.6

2

FIG.7

FIG.8

FIG. 9

FIG. 10

4

EP 0 204 005 B1

FIG.11

FIG.12

5

FIG.13

FIG.14

## FIG. 15

## FIG. 16

# FIG.17

# FIG.18